# EUROPEAN PATENT SPECIFICATION

(11) **EP 3 261 728 B1**
(45) Date of publication and mention of the grant of the patent: **07.08.2019**
(21) Application number: 16711332.3
(22) Date of filing: 24.02.2016
(51) Int. Cl.: A62B 15/00, B01D 53/30, B01D 53/047, B01D 53/26

(54) **BREATHING AIR SYSTEM**
ATEMLUFTSYSTEM
SYSTÈME D'AIR RESPIRABLE

(30) Priority: 24.02.2015 GB 201503026
(43) Date of publication of application: 03.01.2018
(73) Proprietor: Safewell Solutions Limited, Banchory, Aberdeenshire AB31 4BW (GB)
(72) Inventor: GARDYNE, Edward Alexander, Aberdeenshire AB31 4BW (GB)
(74) Representative: Gordon, Naoise Padhraic Edward
(86) International application number: PCT/GB2016/000042
(87) International publication number: WO 2016/135436

(56) References cited:
- WO-A1-2010/014014
- DE-A1- 10 228 586
- US-A- 4 983 190
- US-A1- 2011 259 198
- US-B1- 7 294 181

## Description

### Introduction

The present invention relates to a breathing air system with high safety integrity and in particular to a breathing air system which compresses and purifies ambient air to make it is suitable for use in hazardous environments such as on oil and gas platforms, petrochemical and industrial sites or the like.

### Background

Breathing air quality is a term used to loosely describe the extent to which air in a local environment (ambient air) is sufficiently free from pollutants to be safe to breathe. In general, pollutants may be solid particles, liquid droplets or gaseous. Ambient air can contain a large amount of pollutants such as microscopic dust particles, pollen grains, bacteria, viruses, pathogens, water vapour, gases and fumes. Studies have shown that a 'typical' m³ of ambient air may contain between 1.6 and 40 million viruses, between 0.8 and 11 million bacteria and 18.5 million particles. Nevertheless this level of ambient air pollution is generally within safe limits for a human being to cope with.

Pollutants come from a wide range of sources such as engine emissions, chemical processes, agriculture and industrial processes. As a consequence, ambient air quality in a local area varies greatly depending on the environment e.g. ambient air in the countryside will generally contain less contamination than ambient air in an industrial environment or on a busy street or multi-story car park.

In an industrial setting where materials are being created, altered and extracted, significant amounts of airborne by-products are created as gases, liquids and particulates. These may, in and of themselves be hazardous to human health, but in addition, by-products which may otherwise be tolerable, may become hazardous due to their higher concentration following compression.

To improve air quality, in a work environment, ventilation systems are used which remove and/or reduce the concentration of potentially hazardous airborne materials so as to avoid their inhalation by persons at work. Most ventilation systems restrict the movement of air in and between various local areas and may have specific ventilation and filtration capabilities to dilute and remove contamination, airborne microorganisms, viruses, hazardous chemicals, radioactive substances, and the like. However in some work environments, the level of hazardous airborne contaminants makes it necessary to provide a dedicated, personal supply of breathing air for persons working in such an environment.

One solution to this problem is to provide bottled compressed air. However, this is expensive and provides a relatively short time during which a person may work. In most cases, breathing air is provided by a compressor system.

In simple terms, the process of creating compressed air comprises pumping air at ambient pressure into a restricted volume thereby increasing the air pressure and therefore the amount of air contained in the enclosed volume. As a consequence, any pollutants which are present in the ambient air will also be present in the compressed air but now in a concentrated form. For example, a compressor providing an outlet pressure of 8 bar (referenced against ambient air pressure) concentrates the air contamination by 800% i.e. 8m³ of ambient air become pressurised into 1 m³ of compressed air with a consequent increase in the concentration of contaminants.

In addition when ambient air is compressed, part of the water vapour present in the air is condensed as a free liquid condensate such as an oil/water mixture or an oil/water emulsion. The condensate liquid mixes with atmospheric hydrocarbon contaminants as well as oil carried over from lubricated compressors to form an acidic, oily condensate sludge. A 28.3 m³ /min compressed air system operating at a pressure of 7 bar (referenced against ambient air pressure) in a 25°C, 65% RH environment and fitted with a refrigeration dryer can produce up to 220,000 I of oil contaminated condensate per year which has to be efficiently removed from the breathing airline.

Typically the temperature of the air increases by around 10-15°C above the ambient air temperature when the air is compressed and must be cooled before purification for breathing, especially in warmer climates.

WO 2010/014014 A1 describes a mobile breathing air compressor unit arranged for use in an explosive environment. The apparatus comprises an air compression unit, a filter unit, an air accumulator and one or more breathing-air outlets arranged in a transport container. To meet relevant requirements for breathing-air quality an air inlet is provided with a gas detector for automatic warning and stopping of the breathing-air supply on detection of an undesired admixture of gas.

US 2011/0259198 A1 discloses a system for supplying breathing air to a work space. which adopts a triple air-supply structure including a main air-supply unit for compressing. drying and filtering air supplied from the atmosphere so that breathing air is supplied lo the work space. The system comprises a main air-supply unit for compressing. drying and filtering air supplied from the atmosphere so that breathing air is supplied to the work space, a plant air-supply unit for supplying industrial air used in a process plant to the work space, and an emergency air-supply unit.

It is desirable to ensure that an air supply works safely and effectively and to ensure that the equipment is as compact as possible.

### Summary of the Invention

It is an object of the present invention to provide an apparatus which improves the quality of compressor supplied breathing air.

According to the invention there is provided a breathing air system provided in a single integrated unit for use in hazardous environments, the system comprising:
an air inlet for receiving air from an ambient air source;
a compressor system which pressurizes the received air;
an air purifier for removing pollutants from the compressed air;
an air distribution system for supplying the compressed, purified air to an outlet;
an emergency backup store of breathable compressed air; and
a safety control system which comprises a plurality of sensors for monitoring safety critical parameters associated with operation of the breathing air system such that the emergency backup store of breathable compressed air is automatically connected to the outlet upon failure of the supply of compressed purified air and the compressor is automatically shut down when an abnormal operating condition occurs characterised in that the air distribution system comprises an air receiver matrix of compact interconnected pipes which in combination act as a large volume which provides pressurised air storage for on-load / off-load compressor control.

Advantageously, the breathing air system is integrated into a single machine that is located within the hazardous environment where the breathing air is to be supplied. Further advantageously, safety is improved because any fault in the air supply will occur locally on the machine and the emergency backup will be in operation as soon as a fault is detected. Where breathing air is supplied from a central location, for example, a delay may arise in the supply of an alternative air source.

Advantageously, the compression and purification stages are contained within a fully integrated unit with careful design of the interface between the compression stages to control the air temperature to condense water vapour and remove free liquid prior to the purification stage

Preferably, the safety control system comprises sensor(s) which monitor air intake to the compressor, discharge pressure and oil temperature to maintain the compressor in a safe operational state.

Preferably, the sensors monitor the quality of ambient air entering the system.

Preferably, the compressor system comprises an oil lubricated rotary compressor.

Preferably, the compressor system comprises an oil cooler which cools contaminated oil such that it is suitable for reuse in the oil lubricated rotary compressor.

Preferably, the air purifier comprises a water separator for removing bulk condensed water from the compressed air. The term bulk water means the majority of easily recoverable free liquid water condensed from the compressed air leaving only liquid condensate

Preferably, the air purifier comprises a heatless regeneration dryer which controls the residual water vapour as part of the purification stage prior to final purification to breathing air medical standards including the European Pharmacopoeia
Preferably, the air purifier comprises an adsorption dryer.

Preferably, the adsorption dryer comprises two or more chambers in fluid communication with one another such that moist air flows through at least one chamber in the adsorption phase to be dried and a portion of the dried air is channelled through another of said chambers once it has been used to dry air, in order to regenerate the adsorption medium in situ

Advantageously, the air receiver matrix is located in the base of the integrated unit and comprises a plurality of individual connected cylinders allowing the compressor to be controlled on and off load without the need for an external air receiver.

Preferably, the breathing air back-up store comprises one or more air cylinders with stored high pressure compressed air.

Preferably, the breathing air back-up store is activated by a non-electrical redundant pressure switching assembly following automatic compressor safety shutdown.

Preferably, the breathing air back-up store has a non-return valve to prevent back pressure air from entering the air receiver matrix.

Preferably, pressure dewpoint, flow, temperature and gas sensing is integrated on the breathing air system outlet to monitor and log the quality of the produced breathing air is in accordance with recognised breathing quality standards such as EN 12021:2014 and similar national standards for compressed air used for respiratory protection.

Preferably the compressor inlet may be fitted with a duct to allow ambient air to be drawn from a safe location remote from the area in which the breathing air system is located.

### Brief Description of the Drawings

The present invention will now be described by way of example only, with reference to the accompanying drawings in which:
Figure 1 is a block diagram which shows the various parts of an embodiment of an integrated breathing air system in accordance with the present invention;
Figures 2a, 2b and 2c are block diagrams which shows in more detail the components used in an embodiment of an integrated breathing air system in accordance with the present invention;
Figures 3a and 3b are front and rear perspective views of an embodiment of an apparatus in accordance with the present invention; and
Figure 4 shows a flexible duct in accordance with an embodiment of the present invention.

### Detailed Description of the Drawings

The present invention comprises a breathing air system in a compact, fully integrated assembly suitable for use in a hazardous area such as, for example explosive atmospheres and others as defined by the ATEX 95 equipment directive 94/9/EC and the ATEX 137 workplace directive 99/92/EC.

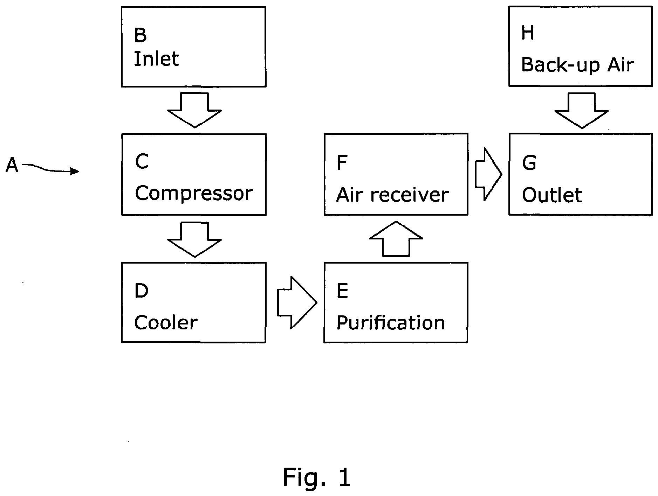

The example of the present invention described below with reference to figures 1, 2 and 3 comprises an air compressor and breathing air purifier to generate breathing quality air for four people at a rate of 100 I per minute per person. Various sensors are used to monitor the safety critical parameters associated with operation of the system to keep operation within safe limits and a high integrity functional safety control system is implemented to assure the safety when deployed in a hazardous environment by shutting down the compressor when the safe operational envelope is breached.

Figure 1 is a schematic diagram which shows the general arrangement of a system in accordance with the present invention in functional terms. The system A comprises an inlet B through which ambient air enters a compressor C. The compressed air is then cooled D to remove at least some of the excess heat caused by compression. Purification E of the air removes impurities and reduces their concentration to acceptable levels. The purified compressed air is then held in a receiver F prior to being delivered to the outlet G where it is connected to breathing apparatus suitable for use by a person. A back-up air supply H is also provided in case the main air supply, compression and purification fails. A programmable electronic safety control system I monitors and controls the safety integrity of the compressor C fitted with a plurality of sensors and provides the means by which the back-up air supply is actuated as and when appropriate.

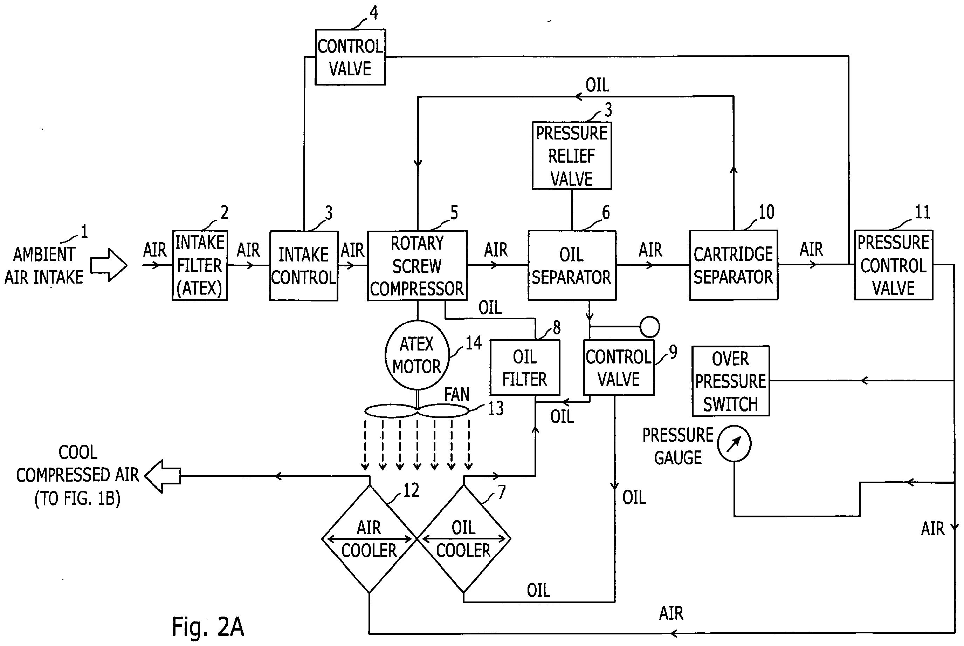

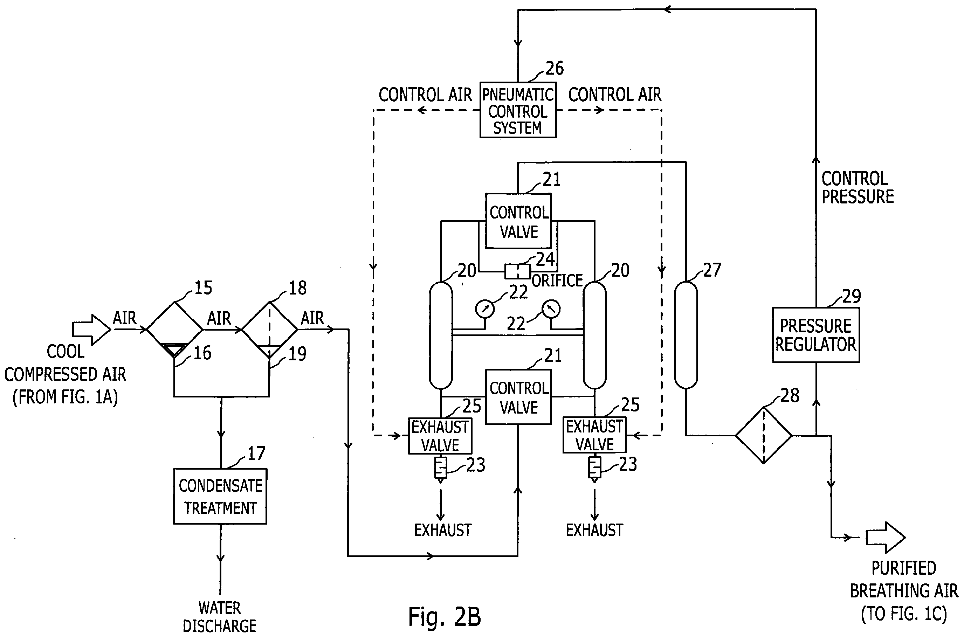

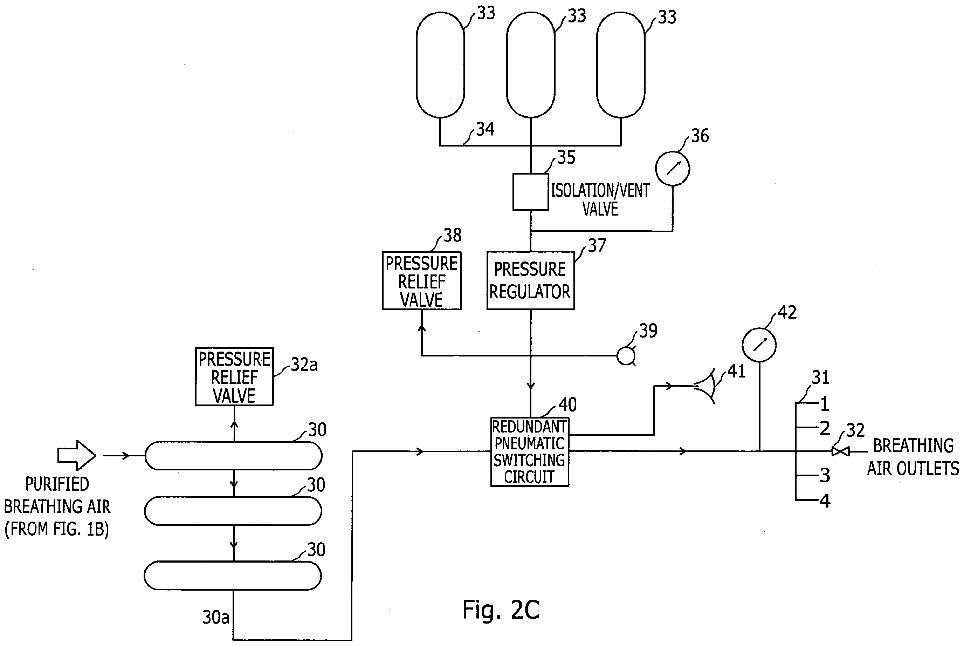

Figures 2a to 2c are schematic diagrams which shows in detail the embodiment of the present invention outlined above.

### The Compressor Stage

The air intake 1 is fitted with an intake filter 2 to remove particulate matter in the intake air and prevent static build up. The air passes through the intake filter 2, intake control 3 and an intake valve 4. An oil lubricated positive displacement rotary screw compressor 5 compresses the ambient air via the intake valve 4. Following this stage there will be a trace of compressor lubricating oil in the compressed air.

The compressed air then flows to a separator tank 6 which separates most of the lubrication oil which drops to the bottom of the separator tank 6. The separated oil is then cooled 7 and recirculated under pressure back to the air end via an oil filter 8. The temperature of the oil is controlled within limits using a thermo- valve and a separate circuit (not shown) on the after-cooler. The oil filter 8 has a by-pass valve 9 fitted which opens if the filter becomes blocked to maintain lubrication of the air end rotary screw.

At the same time the compressed air transfers out of the separator housing 6 and passes through a cartridge separator 10 to remove residual oil mist to a level less than 5 parts per million.

During compression the temperature of the air when compressed typically increases by around 10-15°C. For comfort of the air user and also to condense out water vapour in the air to make the air purification stage safer and more efficient, the clean compressed air is then passed via a minimum pressure valve 11 through a close coupled air cooled after cooler 12. The minimum pressure valve 11 functions to hold the system pressure above a minimum value and also as a non-return valve to prevent back flow of air into the air end. In this embodiment the after cooler 12 has a greater surface area than would be typically used on a compressor motor 14 of this size, to enhance and improve the efficiency of the cooling effect. Ambient air is drawn in to the front of the unit via a cooling air intake using an axial fan 13 driven by the compressor motor 14 and across the after cooler body. The cooling air flow exits the unit via the cooling air discharge on the rear of the unit. Typical performance of the air circuit after-cooler system is to maintain the temperature of the compressed air within a maximum of 5 °C above the ambient temperature of the air drawn into the air intake.

Also it should be noted that in this embodiment of the invention, the air after cooler 12 used is sized above the normally specified size for a compressor of its size to allow the air leaving the compressor to be cooled very efficiently. Cooling reduces the air temperature, condenses water vapour and precipitates water droplets. The management of condensed water and water vapour is a key parameter influencing the safety performance of the air purification stage.

The air passes from the after-cooler 12 to a cyclone water separator 15 with automatic drain 16 which removes bulk condensed water from the air prior to entering the breathing air purification stage. The automatic drain discharges the condensate to a condensate treatment system 17 inside the unit which separates the free oil phase from the water and discharges the water phase via the condensate outlet port on the side of the unit. The purpose of the condensate removal is to reduce the potential for free liquid to enter the breathing air purification stage thereby reducing the efficiency and safety of the breathing air purification stage.

The above arrangement provides close control of compressor outlet temperature and condensed water removal.

### Breathing Air Purification

The air then passes to a purification system which consists of several stages of air purification arranged in a safe logical sequence.

The first stage following the cyclone separator 15 is a pre-filter 18 to remove any remaining free liquid water and remove particulate matter in the compressed air. The pre-filter housing is fitted with an automatic drain 19 to automatically drain any retained water and discharge it the condensate to a condensate treatment system.

The air passes from the pre-filter 18 to a close coupled adsorption dryer with alternating adsorption and regeneration phases. The purpose of the dryer is to reduce the level of water vapour in the compressed air. The dryer consists of two pressurised vessels 20 each containing desiccant adsorbent media with appropriate inlet shuttle control valves 21, pressure sensors 22 and exhaust valve outlets 25. The adsorption media is based on a molecule sieve. It captures water vapour in the air stream and also Carbon dioxide, Hydrogen Sulphide, Nitrogen dioxide and Sulphur dioxide. The compressed air is dried in the one adsorber while the other adsorber is being regenerated. During regeneration of a vessel, the desiccant in the vessel concerned is purged using a small percentage of dried air from the other vessel delivered via a regeneration valve or orifice 24. This procedure allows continuous operation as described below.

The compressed air to be dried flows from the inlet through the prefilter 18 and shuttle control valve 21 to one of the adsorbers 20. It flows through the adsorber from bottom to top. In the upper part of the adsorber, the dried compressed air passes through the flow distributor and flows to the dry gas outlet via the upper shuttle control valve 21.

The automatic regeneration of the moisture-laden desiccant is achieved in situ with a partial flow of the dried compressed air via the regeneration valve or orifice 24. At the start of regeneration, one of the exhaust valves 25 at the regeneration air outlet is opened. In this way the adsorber vessel is brought down to atmospheric pressure. The compressed air passes out of the system through the silencers 23. The amount of gas required for regeneration is limited by a regeneration valve orifice 24, mounted in the regeneration air bypass-line.

Following regeneration of the media in an adsorption vessel 20, the relevant exhaust valve 25 at the regeneration outlet is closed to signal the end of the regeneration phase for the vessel concerned. The pressure in the regenerating adsorption vessel 20 will then be built up again via the bypass pipe in the upper piping. The regenerated adsorber remains in stand-by until the switching-over procedure is initiated.

The switching-over procedure is fully pneumatic and will be initiated by a pneumatic control system 26 at the end of the fixed adsorption time. The switching-over procedure is done in the following stages, assuming that both adsorption vessels are already at operating pressure.
- One of the exhaust valves 25 is opened by the pneumatic controller, a shuttle control valve 21, operates according to the pressure differential at the shuttle valve body.
- The pneumatic controller 26 closes one the exhaust valves 25 after a set regeneration time causing pressure build up as described above.
- Following a pressure build up period of a set time, the pneumatic controller opens the second exhaust valve 25 and the sequence repeats over and over every few minutes ensuring that one adsorber vessel is always in duty and one is undergoing regeneration.

Following reduction in the water vapour content of the compressed air, the air passes to a third adsorption vessel 27 which contains a special adsorbent / catalyst mix which further purifies the compressed air to a breathing standard by reducing the level of residual oil mist to trace levels, catalysing carbon monoxide to carbon dioxide, and removing odours and taste.

Following the dryer stage described above the water vapour level of the compressed air provides a pressure dewpoint in the range -20 to -60 °C. Water vapour control is specified in terms of pressure dewpoint temperature, that is, the temperature at which compressed air saturated with water vapour will begin to condense to form free liquid. Pressure Dew point temperature is a measure of how much water vapour there is in a gas. Typically, the pressure dewpoint temperature specified for compressed air used for breathing is 5 °C below the typical ambient temperature at which the air is being delivered or if the ambient temperature is not known, -11 °C.

However, the -11 °C target for water vapour control is a minimum safe standard and more rigorous control of water vapour level is required to assure the safety of the compressed breathing air. More rigorous control is preferred because the process of ambient air compression provides an ideal breeding ground for bacteria such as e-coli. Bacteria drawn in via the compressor intake are concentrated via the compression process in a humid and warm environment in the compressed air system providing ideal conditions for proliferation. Reducing the water content of the compressed air to a low level of around (minus) -26 °C is known to reduce bacterial survival in the air system.

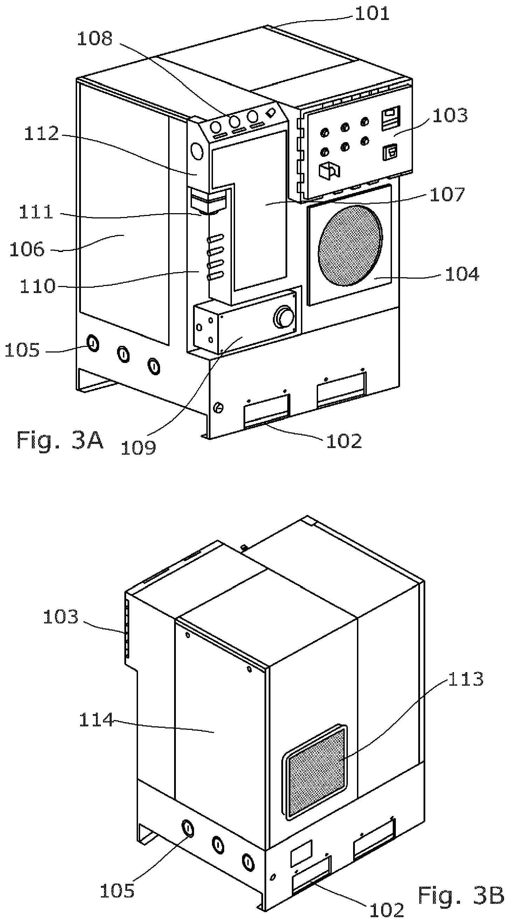

The purified breathing air passes from the purification stage to a matrix of interconnected horizontal steel receiver pressure vessels 30 mounted in the base of the unit. Typically compressor mounted receivers consist of a single large pressure receiving tank. In this invention to keep the overall unit compact a matrix of interconnected pipe like pressure vessels is used. These are installed discreetly in the base plinth of the compact assembly (Figures 3a and 3b) and when the compressor is in operation, the matrix of vessels together provide a pressurised volume of dry purified breathing air which is used to control the 'on-load' (7.5 bar referenced against ambient air pressure) and 'off-load' (9.5 bar referenced against ambient air pressure) pressure settings for the compressor.

The outlet of the pressure receiving matrix 30a passes via pipework to a distribution manifold 31 which has four quick release couplings where the air users may plug in their air supply hoses. The manifold also has an air supply connection which is normally blanked off. This air supply is controlled via a valve 32. The purpose of the larger air supply connection is to provide a feeder air supply to an externally mounted distribution manifold should the end user, require breathing air distribution via longer hoses.

The compact assembly includes a number of high pressure breathing air cylinders 33 (3 or more) mounted in a secure rack, which may be optionally used to provide a backup air supply to users should the compressor air end shut down automatically as described previously.

In this embodiment 3 x 9 or 10 I cylinders 33 are used each charged with breathing quality air to a pressure around 232 bar referenced against ambient air pressure. Each cylinder has a dedicated connection assembly 34 for connection to the BSP cylinder outlets including control valves 35 to connect the high pressure air to the main high pressure manifold within the compact assembly using flexible high pressure hoses.

The high pressure distribution manifold has an isolation vent valve 35 and a pressure gauge 36. The high pressure air supply is connected to a diving type high pressure regulator 37 which reduces the pressure from around 232 bar referenced against ambient air pressure to 7.5 bar referenced against ambient air pressure.

A pressure relief valve 38 is fitted on the low pressure line from the regulator and a pneumatic indicator 39 is installed to indicate that the high pressure air is on-line.

The regulated air supply is connected to a backup air flow control assembly which is also connected to the main breathing air distribution system as described above. The flow control assembly is fully pneumatic and redundant and when the pressure in the main breathing air distribution system drops below the regulated pressure e.g. as would occur following a compressor shutdown, the backup air is automatically switched through to the user distribution manifold via a redundant switching manifold with high safety integrity consisting of check valves and quick exhaust valves (not shown) .Non-return (check valves) are installed to prevent back flow of the regulated air supply into the receiver matrix in the base of the unit. In this initial embodiment it is calculated that 3 x 9L high pressure storage cylinders will provide sufficient back up air for 4 people for at least 10 minutes at 100 I per person per minute. A final pressure gauge 42 indicates delivery pressure.

Figures 3a and 3b are front and rear perspective views of an example of an apparatus in accordance with the present invention. The functional components of the system as described with reference to figures 2a to 2c are contained within a single, compact floor mounted unit which may be installed in a hazardous environment.

The fully integrated unit 101 described is a compact stand-alone unit of approximate dimensions 1.3 m high x 1.0 m wide x 0.9 m deep, constructed using a powder coated mild steel assembly. The unit is floor standing on a plinth 102 provided with holes for manual handling using pallet truck or forklift. The weight of the unit is approximately 500 kg. The enclosure is divided into functional compartments with removable access covers 106 and panels 107 for lifecycle service and maintenance.

A further embodiment of the unit for use in an offshore oil and gas or marine environment involves mounting the breathing air compressor system in a certified DNV 2.7-1 lifting crash frame.

This compact assembly contains all the functional elements of the ATEX breathing air compressor including the pressurised air generation (air end), air cooling 113 condensate removal, air purification, air storage matrix for pressure control 105 , air distribution 110, 111, emergency escape air storage, electrical power distribution 109 and protection, functional safety control system 103 alarms 112, indication devices 108 and sensors for monitoring in real time. To become operational the unit requires a three phase 440VAC, 50 Hz or 440VAC, 60 Hz electrical supply.

The present invention provides a system in which the free liquid and water vapour content of compressed air is carefully controlled to control the potential for bacteria growth, prevent condensation, freezing (also by deposition) and corrosion which can affect the safety of the purification system and the process.

It should be noted that in prior art, some types of breathing air compressors and breathing air systems use manual drain valves to allow any condensed water to be removed from the compressor pressure receiver. In this invention automatic drains are integrated to automatically drain off any condensed water prior to the air purification stage.

It should also be noted that in prior art, some types of breathing air compressors and breathing air systems, relying on simple deliquescent type filters to reduce water vapour levels and pressure dewpoint but these type of filters melt and dissolve during operation and are not possible of regeneration in situ. Typically such filters are rated by manufacturers as only suitable for a certain number of hours of operation based on assumed air quality. When challenged by compressed air with a heavy water loading these filters can be rapidly used leading to loss of water vapour control with potentially dangerous safety and long term health consequences for the person breathing from the compressor.

Also on other breathing air systems in prior art, fridge dryers are used to control the water vapour level of the breathing air. The principle is to cool the air to condense out the saturated water vapour, However use of this type of dryer is limited by the fact that water freezes at 0 °C and freezing would block the dryer so the only practical option is to limit the pressure dewpoint to +3 to +5 °C which is the typical performance of a fridge dryer. Based on air quality standards and known risk factors, the use of a fridge dryer in a breathing air compressor or breathing air system is not safe enough to be recommended.

In this invention the purification system is close coupled to the compression stage within the fully integrated breathing air compressor encapsulated body. The purification system is connected following the compressor after cooler and automatic drain to prevent any free liquid condensed water from entering the purification unit and reducing its safety performance.

This and other embodiments of the present invention have a safety control system providing a high level of safety integrity as defined by recognised functional safety standards such as the machinery directive EN IEC62061 allowing the breathing air system to be safely used in electrically hazardous (ATEX zone 1) areas.

The present invention provides a highly integrated system which supplies high quality breathing air. One significant aspect of the present invention is the extent to which the unit monitors and controls the functional elements of the device to ensure that any malfunction is detected quickly and the appropriate control measures implemented., For example:
Air end oil temperature is monitored in real time during operation, this embodiment of the invention is fitted with a high integrity sensor which is connected to the functional safety control system which automatically shuts down the compressor motor if the maximum safe oil temperature is exceeded.
- Machine air discharge air pressure is monitored in real time during operation by a high integrity sensor which is connected to the functional safety control system which automatically shuts down the compressor motor if the maximum safe air discharge pressure is exceeded.
- Air intake quality entering the enclosure atmosphere is monitored in real time during operation this embodiment is fitted with a high integrity sensor which is connected to the functional safety control system which automatically shuts down the compressor motor if the maximum safe level of combustible gas is detected.
- Other gases such as carbon monoxide and hydrogen sulphide may also be monitored and lead to compression shutdown.
- Motor temperature is monitored in real time during operation by a high integrity sensor which is connected to the functional safety control system which automatically shuts down the compressor motor if a high motor temperature condition is detected to prevent overload.
- An operator emergency stop facility is provided with a high integrity safety relay which is connected to the functional safety control system to allow the machine operator to safely shut down the compressor motor in an unsafe situation.

The safety reliability of the breathing air system safety functions has been validated in accordance with recognised functional safety standards such as IEC61508

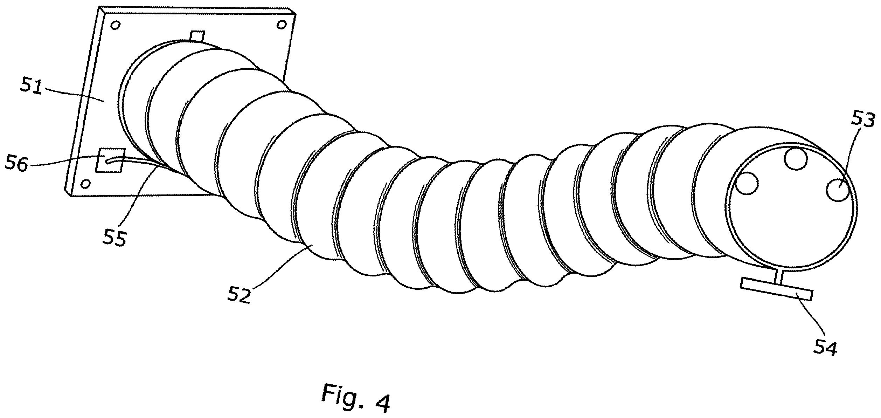

Fig 4 is a representation of a smart intake duct that can be fitted to the breathing air system compressor intake as an option to draw ambient air for compression from a more hazard free area. The compressor intake plate 51 allows a flexible duct 52 of variable length to be connected. The distal end of the duct has an integral ring of gas sensors 53 mounted in the lumen, a mounting bracket 54 and a power and signal cable loom 55 woven or integrated into the duct wall to provide power and monitoring of the gas sensor ring 53. The cable terminates in a plug and socket arrangement 6 on the breathing air system intake plate 51 allowing the internal safety control system to use the sensor feedback for safety and shutdown purposes.

## Claims

1. A breathing air system provided in a single integrated unit (101) for use in hazardous environments, the system comprising:
an air inlet (2,3) for receiving air from an ambient air source (1);
a compressor system (5) which pressurizes the received air;
an air purifier (15,18,20) for removing pollutants from the compressed air;
an air distribution system (31) for supplying the compressed, purified air to an outlet (32);
an emergency backup store of breathable compressed air (33); and
a safety control system (103) which comprises a plurality of sensors for monitoring safety critical parameters associated with operation of the breathing air system such that the emergency backup store (33) of breathable compressed air is automatically connected to the outlet (32) upon failure of the supply of compressed purified air and the compressor (5) is automatically shut down when an abnormal operating condition occurs **characterised in that**: the air distribution system (31) comprises an air receiver matrix (30) of compact interconnected pipes which in combination act as a large volume which provides pressurised air storage for on-load / off-load compressor control.

2. A breathing air system as claimed in claim 1 wherein, the safety control system (103) comprises sensor(s) (22) which monitor air intake to the compressor (5), discharge pressure and/or oil temperature to maintain the compressor in a safe operational state (4,7,9,12).

3. A breathing air system (101) as claimed in claim 1 wherein, the sensors monitor the quality of ambient air entering the system (3).

4. A breathing air system as claimed in any preceding claim wherein, the compressor system (103) comprises an oil lubricated rotary compressor (5).

5. A breathing air system (101) as claimed in any preceding claim wherein, the compressor system comprises an oil cooler (7) which cools contaminated oil such that it is suitable for reuse in the oil lubricated rotary compressor.

6. A breathing air system (101) as claimed in any preceding claim wherein, the air purifier comprises a water separator (15) for removing bulk condensed water from the compressed air.

7. A breathing air system (101) as claimed in any preceding claim wherein, the air purifier comprises a heatless regeneration dryer (20) which controls the residual water vapour as part of the purification stage prior to final purification to breathing air medical standards including the European Pharmacopoeia

8. A breathing air system (101) as claimed in any preceding claim wherein, the air purifier comprises an adsorption dryer (20).

9. A breathing air system (101) as claimed in claim 8 wherein, the adsorption dryer (20) comprises two or more chambers in fluid communication with one another such that moist air flows through at least one chamber in the adsorption phase to be dried and a portion of the dried air is channelled through another of said chambers once it has been used to dry air, in order to regenerate the adsorption medium in situ

10. A breathing air system (101) as claimed in claim 1 wherein, the air receiver matrix (30, 105) is located in the base (102) of the integrated unit and comprises a plurality of individual connected cylinders allowing the compressor to be controlled on and off load without the need for an external air receiver.

11. A breathing air system (101) as claimed in any preceding claim wherein the emergency back-up store (33) comprises one or more air cylinders (33) with stored high pressure compressed air.

12. A breathing air system (101) as claimed in claim 11 wherein, the emergency back-up store (33) is activated by a non-electrical redundant pressure switching assembly following automatic compressor safety shutdown.

13. A breathing air system (101) as claimed in claim 11 or claim 12 wherein, the emergency back-up store (33) has a non-return valve (35) to prevent back pressure air from entering the air receiver matrix.

14. A breathing air system (101) as claimed in any preceding claim wherein, pressure dewpoint, flow, temperature and/or gas sensing is integrated on the breathing air system outlet to monitor and log the quality of the produced breathing air is in accordance with recognised breathing quality standards such as EN 12021:2014 and similar national standards for compressed air used for respiratory protection.

15. A breathing air system (101) as claimed in any preceding claim wherein a compressor inlet is fitted with a duct (52) to allow ambient air to be drawn from a safe location remote from the area in which the breathing air system is located.

## Patentansprüche

1. Atemluftsystem, das in einer einzigen integrierten Einheit (101) zur Verwendung in gefährlichen Umgebungen bereitgestellt ist, wobei das System Folgendes umfasst:
einen Lufteinlass (2, 3) zum Empfangen von Luft aus einer Umgebungsluftquelle (1);
ein Kompressorsystem (5), das die empfangene Luft unter Druck setzt;
einen Luftreiniger (15, 18, 20) zum Entfernen von Verunreinigungen aus der komprimierten Luft;
ein Luftverteilungssystem (31) zum Zuführen der komprimierten gereinigten Luft zu einem Auslass (32);
einen Notspeicher für zum Atmen geeignete komprimierte Luft (33); und
ein Sicherheitssteuersystem (103), das eine Vielzahl von Sensoren zur Überwachung sicherheitskritischer Parameter, die mit dem Betrieb des Atemluftsystems assoziiert sind, umfasst, sodass der Notspeicher (33) für zum Atmen geeignete komprimierte Luft bei Ausfall der Zufuhr von komprimierter gereinigter Luft automatisch mit dem Auslass (32) verbunden wird und der Kompressor (5) automatisch abgeschaltet wird, wenn eine anormale Betriebsbedingung entsteht, **dadurch gekennzeichnet, dass** das Luftverteilungssystem (31) eine Luftbehältermatrix (30) aus kompakten miteinander verbundenen Rohren umfasst, die in Kombination als ein großes Volumen wirken, das Speicherung unter Druck gesetzter Luft für die Steuerung des Kompressors im Betrieb unter Last/im Leerlauf bereitstellt.

2. Atemluftsystem nach Anspruch 1, wobei das Sicherheitssteuersystem (103) einen Sensor/Sensoren (22) umfasst, der/die den Lufteintritt in den Kompressor (5), den Auslassdruck und/oder die Öltemperatur überwacht/überwachen, um den Kompressor in einem sicheren Betriebszustand (4, 7, 9, 12) zu halten.

3. Atemluftsystem (101) nach Anspruch 1, wobei die Sensoren die Qualität der Umgebungsluft, die in das System (3) eintritt, überwachen.

4. Atemluftsystem nach einem der vorhergehenden Ansprüche, wobei das Kompressorsystem (103) einen ölgeschmierten Rotationskompressor (5) umfasst.

5. Atemluftsystem (101) nach einem der vorhergehenden Ansprüche, wobei das Kompressorsystem einen Ölkühler (7) umfasst, der verunreinigtes Öl kühlt, sodass es zur Wiederverwendung in dem ölgeschmierten Rotationskompressor geeignet ist.

6. Atemluftsystem (101) nach einem der vorhergehenden Ansprüche, wobei der Luftreiniger einen Wasserabscheider (15) zum Entfernen von Kondenswasser in großen Mengen aus der komprimierten Luft umfasst.

7. Atemluftsystem (101) nach einem der vorhergehenden Ansprüche, wobei der Luftreiniger einen kaltregenerierenden Trockner (20) umfasst, der den Restwasserdampf als Teil der Reinigungsstufe vor der endgültigen Reinigung zu Atemluft nach medizinischen Standards, einschließlich des Europäischen Arzneibuchs, steuert.

8. Atemluftsystem (101) nach einem der vorhergehenden Ansprüche, wobei der Luftreiniger einen Adsorptionstrockner (20) umfasst.

9. Atemluftsystem (101) nach Anspruch 8, wobei der Adsorptionstrockner (20) zwei oder mehr Kammern in Fluidkommunikation miteinander umfasst, sodass feuchte Luft in der Adsorptionsphase durch mindestens eine Kammer strömt, um getrocknet zu werden, und ein Teil der getrockneten Luft durch eine andere der Kammern geschleust wird, nachdem sie zum Trocknen von Luft verwendet wurde, um das Adsorptionsmedium in situ zu regenerieren.

10. Atemluftsystem (101) nach Anspruch 1, wobei die Luftbehältermatrix (30, 105) in der Basis (102) der integrierten Einheit angeordnet ist und eine Vielzahl von einzelnen verbundenen Zylindern umfasst, was ermöglicht, dass der Kompressor unter Last und im Leerlauf gesteuert werden kann, ohne dass ein externer Luftbehälter erforderlich ist.

11. Atemluftsystem (101) nach einem der vorhergehenden Ansprüche, wobei der Notspeicher (33) einen oder mehrere Luftzylinder (33) mit gespeicherter hochkomprimierter Luft umfasst.

12. Atemluftsystem (101) nach Anspruch 11, wobei der Notspeicher (33) durch eine nichtelektrische redundante Druckschaltanordnung nach einer automatischen Sicherheitsabschaltung des Kompressors aktiviert wird.

13. Atemluftsystem (101) nach Anspruch 11 oder Anspruch 12, wobei der Notspeicher (33) ein Rückschlagventil (35) aufweist, um zu verhindern, dass Gegendruckluft in die Luftbehältermatrix eintritt.

14. Atemluftsystem (101) nach einem der vorhergehenden Ansprüche, wobei Drucktaupunkt-, Durchfluss-, Temperatur- und/oder Gasmessung in dem Atemluftsystemauslass integriert ist, um die Qualität der erzeugten Atemluft ist in Übereinstimmung mit anerkannten Atemqualitätsstandards wie EN 12021:2014 und ähnlichen nationalen Standards für komprimierte Luft zum Schutz der Atemwege zu überwachen und zu protokollieren.

15. Atemluftsystem (101) nach einem der vorhergehenden Ansprüche, wobei ein Kompressoreinlass mit einem Kanal (52) ausgestattet ist, um zu ermöglichen, dass Umgebungsluft von einem sicheren Ort entfernt von dem Bereich, in dem das Atemluftsystem angeordnet ist, angesaugt wird.

## Revendications

1. Un système d'air respirable fourni dans une unité intégrée unique (101) pour être utilisé dans des environnements dangereux, le système comprenant :
une entrée d'air (2, 3) pour recevoir de l'air provenant d'une source d'air ambiant (1) ;
un système de compresseur (5) qui met sous pression l'air reçu ;
un purificateur d'air (15, 18, 20) pour éliminer les polluants de l'air comprimé ;
un système de distribution d'air (31) pour amener l'air purifié comprimé à une sortie (32) ;
une réserve de secours d'urgence d'air comprimé respirable (33) ; et
un système de contrôle de sécurité (103) qui comprend une pluralité de capteurs pour surveiller des paramètres critiques de sécurité associés au fonctionnement du système d'air respirable de telle sorte que la réserve de secours d'urgence (33) d'air comprimé respirable soit automatiquement raccordée à la sortie (32) en cas de défaillance de l'alimentation en air purifié comprimé et que le compresseur (5) soit automatiquement arrêté en cas de survenue d'une condition de fonctionnement anormal **caractérisé en ce que** : le système de distribution d'air (31) comprend une matrice de réception d'air (30) constituée de tuyaux compacts raccordés entre eux qui, en combinaison, forment un volume important qui fournit un stockage d'air sous pression pour le contrôle du compresseur en charge/hors charge.

2. Un système d'air respirable tel que revendiqué dans la revendication 1 dans lequel le système de contrôle de sécurité (103) comprend un ou des capteurs (22) qui surveillent l'admission d'air dans le compresseur (5), la pression de refoulement et/ou la température d'huile pour maintenir le compresseur dans un état de fonctionnement sûr (4, 7, 9, 12).

3. Un système d'air respirable (101) tel que revendiqué dans la revendication 1, dans lequel les capteurs surveillent la qualité de l'air ambiant entrant dans le système (3).

4. Un système d'air respirable tel que revendiqué dans n'importe quelle revendication précédente, dans lequel le système de compresseur (103) comprend un compresseur rotatif lubrifié à l'huile (5).

5. Un système d'air respirable (101) tel que revendiqué dans n'importe quelle revendication précédente, dans lequel le système de compresseur comprend un refroidisseur d'huile (7) qui refroidit l'huile contaminée de telle sorte qu'elle soit apte à être réutilisée dans le compresseur rotatif lubrifié à l'huile.

6. Un système d'air respirable (101) tel que revendiqué dans n'importe quelle revendication précédente, dans lequel le purificateur d'air comprend un séparateur d'eau (15) pour éliminer le volume de l'eau condensée de l'air comprimé.

7. Un système d'air respirable (101) tel que revendiqué dans n'importe quelle revendication précédente, dans lequel le purificateur d'air comprend un séchoir à régénération sans chaleur (20) qui contrôle la vapeur d'eau résiduelle dans le cadre de l'étape de purification avant la purification finale permettant d'atteindre les normes médicales pour l'air respirable, y compris la Pharmacopée européenne.

8. Un système d'air respirable (101) tel que revendiqué dans n'importe quelle revendication précédente, dans lequel le purificateur d'air comprend un séchoir par adsorption (20).

9. Un système d'air respirable (101) tel que revendiqué dans la revendication 8, dans lequel le séchoir par adsorption (20) comprend deux chambres ou plus en communication fluidique les unes avec les autres de telle sorte que de l'air humide s'écoule à travers au moins une chambre dans la phase d'adsorption pour être séché et qu'une partie de l'air séché passe par une autre desdites chambres une fois qu'elle a été utilisée pour sécher de l'air, afin de régénérer le milieu d'adsorption in situ.

10. Un système d'air respirable (101) tel que revendiqué dans la revendication 1, dans lequel la matrice de réception d'air (30, 105) est située dans la base (102) de l'unité intégrée et comprend une pluralité de cylindres raccordés individuellement permettant au compresseur d'être contrôlé en charge et hors charge sans qu'un récepteur d'air externe soit nécessaire.

11. Un système d'air respirable (101) tel que revendiqué dans n'importe quelle revendication précédente, dans lequel la réserve de secours d'urgence (33) comprend un ou plusieurs cylindres à air (33) avec de l'air comprimé à haute pression en réserve.

12. Un système d'air respiratoire (101) tel que revendiqué dans la revendication 11, dans lequel la réserve de secours d'urgence (33) est activée par un ensemble de commutation de pression redondant non électrique à la suite de l'arrêt de sécurité automatique du compresseur.

13. Un système d'air respirable (101) tel que revendiqué dans la revendication 11 ou la revendication 12, dans lequel la réserve de secours d'urgence (33) a un clapet anti-retour (35) pour empêcher l'air de contre-pression d'entrer dans la matrice de réception d'air.

14. Un système d'air respiratoire (101) tel que revendiqué dans n'importe quelle revendication précédente, dans lequel le point de rosée sous pression, le débit, la température et/ou la détection de gaz sont intégrés à la sortie du système d'air respirable pour surveiller et enregistrer la qualité de l'air respirable produit est conforme avec des normes de qualité respiratoire reconnues telles que EN 12021:2014 et des normes nationales similaires pour l'air comprimé utilisé pour la protection respiratoire.

15. Un système d'air respirable (101) tel que revendiqué dans n'importe quelle revendication précédente, dans lequel une entrée de compresseur est équipée d'un conduit (52) pour permettre à l'air ambiant d'être aspiré d'un emplacement sûr éloigné de la zone dans laquelle se trouve le système d'air respirable.
